# EUROPÄISCHE PATENTSCHRIFT

(11) **EP 3 071 455 B1**
(45) Veröffentlichungstag und Bekanntmachung des Hinweises auf die Patenterteilung: **16.05.2018**
(21) Anmeldenummer: 14798737.4
(22) Anmeldetag: 03.11.2014
(51) Int. Cl.: B60R 16/027

(54) **VORRICHTUNG ZUM ÜBERTRAGEN VON ELEKTRISCHEN SIGNALEN AN UND/ODER VON EINEM DREHBAREN BAUTEIL EINES KRAFTFAHRZEUGS, LENKSÄULENMODUL UND KRAFTFAHRZEUG**
DEVICE FOR TRANSMITTING ELECTRIC SIGNALS FORM A ROTATING VEHICLE ELEMENT, STEERING WHEEL COLUMN AND VEHICLE
DISPOSITIF POUR TRANSMETTRE DES SIGNAUX ÉLECTRIQUES D'UN VOLANT DE VÉHICULE, VOLANT ET VÉHICULE

(30) Priorität: 22.11.2013 DE 102013019562
(43) Veröffentlichungstag der Anmeldung: 28.09.2016
(73) Patentinhaber: Valeo Schalter und Sensoren GmbH, 74321 Bietigheim-Bissingen (DE)
(72) Erfinder: STAUDE, Sascha, 74321 Bietigheim-Bissingen (DE); LIPFERT, Rainer, 74321 Bietigheim-Bissingen (DE); SCHWARZ, Viktoria, 74321 Bietigheim-Bissingen (DE); GRUENER, Roland, 74321 Bietigheim-Bissingen (DE); SIMONIS, Karl, 74321 Bietigheim-Bissingen (DE)
(86) Internationale Anmeldenummer: PCT/EP2014/073600
(87) Internationale Veröffentlichungsnummer: WO 2015/074856

(56) Entgegenhaltungen:
- EP-A2- 1 149 739
- EP-A2- 1 468 876
- JP-A- 2008 030 713
- US-A- 5 562 466
- US-A- 5 980 285

## Beschreibung

Die Erfindung betrifft eine Vorrichtung zum Übertragen von elektrischen Signalen an und/oder von einem drehbaren Bauteil eines Kraftfahrzeugs, mit einem ortsfesten Stator zur ortsfesten Installation in dem Kraftfahrzeug, und mit einem an dem Stator drehbar gelagerten Rotor zur drehfesten Ankopplung an das drehbare Bauteil des Kraftfahrzeugs, wobei der Stator ein Gehäuse aufweist, in welchem ein Flachkabel zum Übertragen der elektrischen Signale angeordnet ist, wobei an dem Rotor ein mit dem Flachkabel elektrisch gekoppeltes Verbindungsstück angeordnet ist, welches zum Verbinden mit einem korrespondierenden Gegenstück des drehbaren Bauteils ausgebildet ist, und wobei der Rotor ein Sichtfenster aufweist, durch welches in einer Nullstellung des Rotors bezüglich des Stators ein vorbestimmtes Referenzelement des Flachkabels für einen von außerhalb des Gehäuses blickenden Betrachter erkennbar ist. Die Erfindung betrifft außerdem ein Lenksäulenmodul mit einer solchen Vorrichtung sowie ein Kraftfahrzeug mit einer solchen Vorrichtung und/oder einem derartigen Lenksäulenmodul.

Elektronische Lenksäulenmodule für Kraftfahrzeuge sind bereits aus dem Stand der Technik bekannt. Solche Lenksäulenmodule beinhalten üblicherweise eine Verbindungsvorrichtung bzw. einen Drehverbinder, welche/welcher zum Übertragen von elektrischen Signalen - Steuersignalen und/oder Versorgungsspannungen - zwischen ortsfesten Steuergeräten einerseits und dem Lenkrad andererseits dienen. Die bekannten Lenksäulenmodule umfassen üblicherweise ein ortsfestes Bauteil bzw. einen Stator, welches/welcher ortsfest in dem Kraftfahrzeug angebracht wird, etwa an einem karosseriefest angeordneten Mantel der Lenksäule, in welchem die Lenkwelle drehbar gelagert ist. An dem ortsfesten Stator ist ein Nabenteil drehbar gelagert, welches einen Rotor darstellt und an das Lenkrad drehfest angebunden werden kann. Der ortsfeste Stator weist ein Gehäuse auf, in welchem eine Wickelfeder bzw. ein so genanntes Flachkabel angeordnet ist, über welche/welches die oben genannten elektrischen Signale zwischen Einrichtungen einerseits, die sich im Lenkrad befinden, und Geräten andererseits übertragen werden, die ortsfest im Fahrzeug angeordnet sind. Über ein derartiges Flachkabel wird beispielsweise eine elektrische Heizung im Lenkrad mit elektrischer Energie versorgt. Des Weiteren kann auch ein Airbag im Lenkrad über das Flachkabel angesteuert werden. Ein weiteres Beispiel stellen in das Lenkrad integrierte Bedienelemente dar, welche über das Flachkabel mit Steuergeräten elektrisch verbunden sind, die sich außerhalb des Lenkrads befinden. Das Flachkabel beinhaltet dabei üblicherweise mehrere elektrische Leitungen, welche elektrisch voneinander isoliert sind.

Ein Lenksäulenmodul mit Lenkstockschaltern ist beispielsweise aus der EP 1 462 296 A2 bekannt. Die Ausgestaltung einer Lenksäule mit einem ortsfesten Mantel und einer drehbar in dem Mantel gelagerten Drehwelle ist aus der EP 1 410 971 A2 bekannt.

Bei der Montage des Lenkrads wird dieses an den genannten Rotor des Lenksäulenmoduls drehbar angebunden. Dies bedeutet, dass das Lenkrad derart an der Lenksäule montiert und hierbei auf die Lenkwelle aufgesetzt wird, dass die Drehung des Lenkrads gleichzeitig auch eine Drehung des Rotors des Lenksäulenmoduls bewirkt. Bei der Montage des Lenkrads soll außerdem sichergestellt werden, dass sich der Rotor in einer Nullstellung relativ zum Stator befindet. Im Stand der Technik wird zu diesem Zwecke ein Sichtfenster in dem Rotor bereitgestellt, durch welches in der Nullstellung des Rotors bezüglich des Stators der Monteur ein Referenzelement des Flachkabels, etwa eine Bandschlaufe des Flachkabels, problemlos erkennen kann. Befindet sich hinter dem Sichtfenster also die Bandschlaufe, kann der Monteur annehmen, dass sich der Rotor in der Nullstellung bzw. in der Ausgangsstellung bezüglich des Stators befindet.

Ein derartiges Sichtfenster ist beispielsweise aus dem Dokument EP 1 468 876 B1 bekannt. Als nachteilig an diesem Stand der Technik ist jedoch der Umstand anzusehen, dass dieses Sichtfenster bei der Montage durch ein transparentes Material wieder verdeckt werden muss, um das Eindringen von Schmutz in das Innere des Gehäuses zu verhindern. Es ist somit ein zusätzlicher Montageschritt sowie ein zusätzliches transparentes Material erforderlich, was den gesamten Montageprozess relativ aufwändig macht. Eine weitere Möglichkeit stellt die Ausgestaltung des Rotors bereichsweise aus einem transparenten Material, beispielsweise aus Kunststoff, dar. Dieses durchsichtige Material ist jedoch im Vergleich zu herkömmlichen Materialien relativ teuer, da hier relativ hohe Anforderungen an die mechanischen Eigenschaften des Materials gestellt werden.

Eine Vorrichtung der eingangs genannten Gattung ist des Weiteren aus dem Dokument DE 44 19 077 A1 bekannt.

Es ist Aufgabe der Erfindung, eine Lösung aufzuzeigen, wie bei einer Vorrichtung der eingangs genannten Gattung die Erkennung des Referenzelements des Flachkabels ohne viel Aufwand ermöglicht werden kann.

Diese Aufgabe wird erfindungsgemäß durch eine Vorrichtung, durch ein Lenksäulenmodul sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Vorrichtung ist zum Übertragen von elektrischen Signalen an und/oder von einem drehbaren Bauteil eines Kraftfahrzeugs ausgebildet und umfasst einen ortsfesten Stator zur ortsfesten Installation in dem Kraftfahrzeug sowie einen an dem Stator drehbar gelagerten Rotor zur drehfesten Anbindung an das drehbare Bauteil, insbesondere an ein Lenkrad. Der Stator weist ein Gehäuse auf, in welchem ein Flachkabel zum Übertragen der elektrischen Signale angeordnet ist. An dem Rotor ist ein mit dem Flachkabel elektrisch gekoppeltes Verbindungsstück angeordnet, welches zum Verbinden mit einem korrespondierenden Gegenstück des drehbaren Bauteils ausgebildet ist. Der Rotor weist ein Sichtfenster auf, durch welches in einer Nullstellung des Rotors bezüglich des Stators ein vorbestimmtes Referenzelement des Flachkabels für einen von außerhalb des Gehäuses blickenden Betrachter, etwa einen Monteur, erkennbar ist. Erfindungsgemäß ist vorgesehen, dass das Sichtfenster im Bereich des Verbindungsstücks angeordnet ist, sodass in einem verbundenen Zustand des Verbindungsstücks mit dem Gegenstück das Sichtfenster durch das Gegenstück verdeckt ist.

Dementsprechend ist das Sichtfenster derart im Bereich des Verbindungsstücks angeordnet, dass beim Verbinden des Verbindungsstücks mit dem Gegenstück das Sichtfenster durch das Gegenstück abgedeckt bzw. verschlossen wird. Im verbundenen Zustand ist das Sichtfenster vorzugsweise vollständig derart verdeckt, dass das Referenzelement hinter dem Sichtfenster nicht mehr erkannt werden kann. Die erfindungsgemäße Vorrichtung hat den Vorteil, dass kein zusätzliches transparentes Material zur Abdichtung des Sichtfensters benötigt wird, sodass auf eine Abdichtung des Sichtfensters durch ein solches transparentes Material verzichtet werden kann. Der Materialaufwand und der Montageaufwand sind somit minimal, und dennoch kann das Referenzelement des Flachkabels durch den Monteur problemlos durch das Sichtfenster erkannt werden. Sobald das Lenkrad montiert wird, wird auch das Gegenstück mit dem Verbindungsstück verbunden, und das Sichtfenster zur Wickelbandkassette wird durch das Gegenstück geschlossen.

Es erweist sich als besonders vorteilhaft, wenn das Verbindungsstück des Rotors in Form einer Steckdose mit einer das Verbindungsstück umschließenden Fassung ausgebildet ist, in welche das Gegenstück in Form eines Steckers eingesteckt werden kann. Das Sichtfenster kann hier innerhalb dieser umlaufenden Fassung angeordnet sein, sodass keine Änderungen an dem Gegenstück erforderlich sind, damit das Sichtfenster beim Einstecken des Gegenstücks verdeckt werden kann. Wird das Gegenstück in die Fassung eingesteckt, ist das Sichtfenster automatisch und sofort geschlossen.

Bevorzugt ist an dem Verbindungsstück und/oder an dem Gegenstück ein Dichtelement angeordnet, welches zur Abdichtung des Sichtfensters ausgebildet ist. Somit kann zusätzlich noch das Eindringen von Wasser und/oder Schmutz in das Innere des Gehäuses zuverlässig verhindert werden. Ein derartiges Dichtelement kann beispielsweise eine umlaufende Dichtung sein, welche an einer Innenseite der oben genannten Fassung und/oder an einer Außenseite des Steckers (Gegenstück) angeordnet ist. Wird der Stecker eingesteckt, so befindet sich das Dichtelement somit zwischen der Fassung einerseits und dem Stecker andererseits und kann somit den Bereich des Sichtfensters wirkungsvoll abdichten.

Das oben genannte Referenzelement kann beispielsweise eine Bandschlaufe des Flachkabels sein, welche in der Nullstellung des Rotors in Überlappung mit dem Sichtfenster angeordnet ist. Eine solche Bandschlaufe kann zuverlässig erkannt werden.

Ergänzend oder alternativ kann das Flachkabel im Bereich des Referenzelements - insbesondere an der genannten Bandschlaufe - mit einer zusätzlichen Markierung versehen werden, wie beispielsweise einem entsprechend eingefärbten Streifen oder dergleichen. Eine derartige Markierung sorgt dann für eine bessere optische Wahrnehmung des Referenzelements und verhindert somit Verwechslungen.

Ein erfindungsgemäßes Lenksäulenmodul ist zur Installation an einer Lenksäule eines Kraftfahrzeugs ausgebildet und umfasst eine erfindungsgemäße Vorrichtung. Das Lenksäulenmodul kann beispielsweise auf die Lenksäule des Kraftfahrzeugs aufgesetzt werden. Das Modul kann optional auch zumindest einen Lenkstockschalter aufweisen.

Ein erfindungsgemäßes Kraftfahrzeug, insbesondere ein Personenkraftwagen, umfasst eine erfindungsgemäße Vorrichtung und/oder ein erfindungsgemäßes Lenksäulenmodul.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung ein Lenksäulenmodul mit einer Vorrichtung nach einer Ausführungsform der Erfindung;
- Fig. 2: in schematischer Darstellung ein Verbindungsstück der Vorrichtung; und
- Fig. 3: in schematischer Darstellung das Verbindungsstück im verbundenen Zustand mit einem Gegenstück.

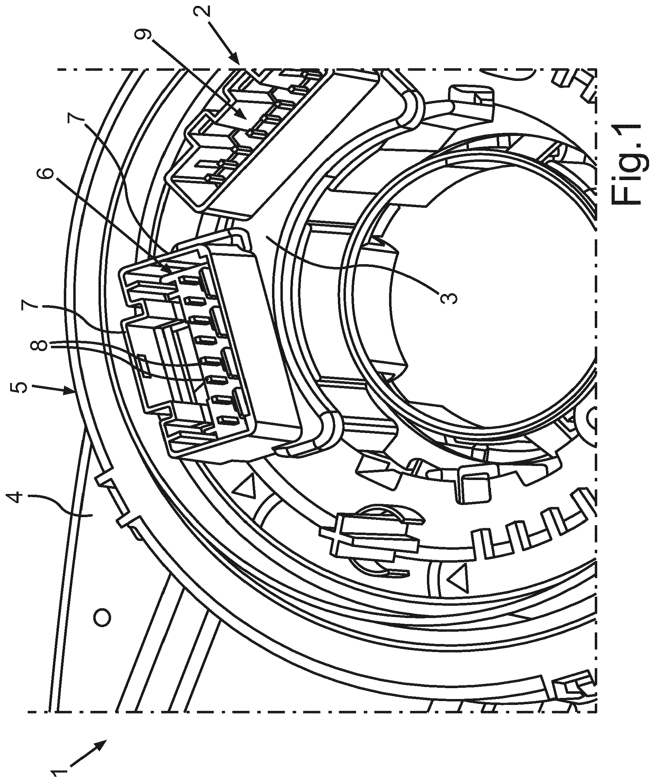

Ein in Fig. 1 dargestelltes Lenksäulenmodul 1 kann an einer Lenksäule eines Personenkraftwagens installiert werden. Das Lenksäulenmodul 1 umfasst eine Vorrichtung 2, welche zum Übertragen von elektrischen Signalen - nämlich Steuersignalen und/oder Versorgungsspannungen - zwischen Steuergeräten des Kraftfahrzeugs einerseits und elektronischen Komponenten andererseits dient, welche in dem Lenkrad untergebracht sind. Die Vorrichtung 2 umfasst einen Rotor 3, welcher ein Nabenteil darstellt, welches auf die Lenkwelle der Lenksäule aufgesteckt werden kann. Die Vorrichtung 2 umfasst des Weiteren einen ortsfesten Stator 4, welcher an der Lenksäule ortsfest angeordnet wird. Beim Drehen des Lenkrads wird also lediglich der Rotor 3 relativ zum Stator 4 gedreht.

Zum Stator 4 gehört ein Gehäuse 5, in welchem ein Flachkabel bzw. eine Wickelfeder angeordnet ist. Über das Flachkabel werden die elektrischen Signale übertragen.

Das Flachkabel ist mit einem Verbindungsstück 6 elektrisch gekoppelt, welches an dem Rotor 3 angeordnet ist. Das Verbindungsstück 6 ist hier in Form einer Steckerwanne bzw.

Steckdose ausgeführt und weist eine das Verbindungsstück 6 umschließende Fassung 7 auf, welche umlaufend ausgebildet ist und zur Aufnahme eines Gegenstücks bzw. eines Steckers dient. Innerhalb der Fassung 7 sind elektrische Kontaktelemente 8 angeordnet, über welche die elektrischen Signale übertragen werden.

An dem Rotor kann auch zumindest eine weitere Steckerwanne 9 angeordnet sein.

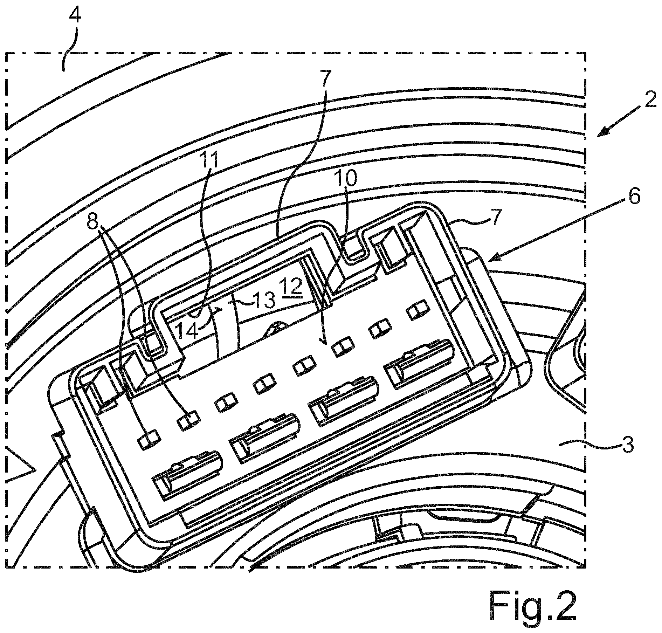

In Fig. 2 ist das Verbindungsstück 6 in vergrößerter Darstellung gezeigt. Wie aus Fig. 2 hervorgeht, ist innerhalb des Verbindungsstücks 6, nämlich an einem Boden 10 des Verbindungsstücks 6, ein rechteckförmiges Sichtfenster 11 ausgebildet, durch welches ein Innenraum 12 des Gehäuses 5 von außen einsehbar ist. Das Sichtfenster 11 ist in Form einer Aussparung bzw. einer Durchgangsöffnung in dem Boden 10 des Verbindungsstücks 6 ausgebildet. Durch das Sichtfenster 11 ist in einer Nullstellung des Rotors 3 bezüglich des Stators 4 ein Referenzelement 13 des Flachkabels 14 erkennbar. Als Referenzelement 13 wird im Ausführungsbeispiel eine Bandschlaufe des Flachkabels 14 verwendet. Diese kann optional mit einer zusätzlichen Markierung versehen sein.

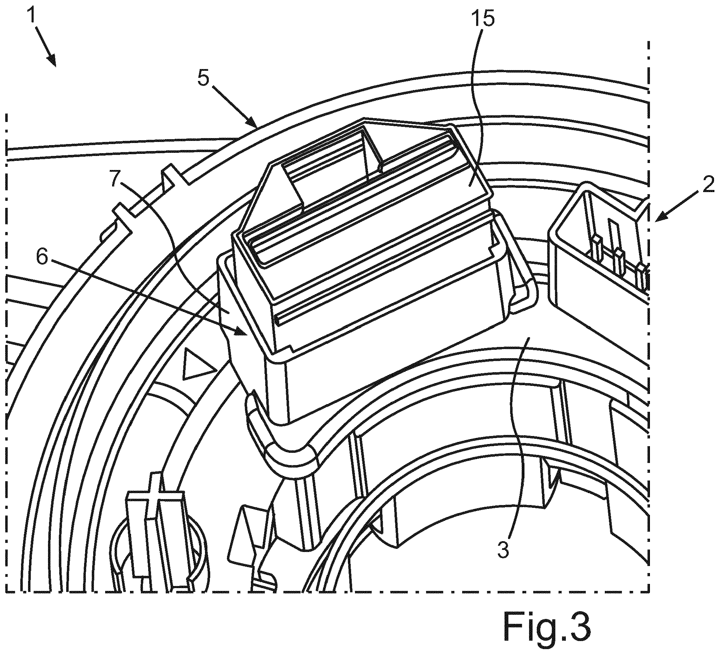

Wird bei der Montage des Lenkrads ein Gegenstück 15 in die Fassung 7 gemäß Fig. 3 eingesteckt und so mit dem Verbindungsstück 6 verbunden, so wird das Sichtfenster 11 durch das Gegenstück 15 verdeckt. Das Sichtfenster 11 wird dabei vollständig geschlossen, sodass das Referenzelement 13 nicht mehr erkannt werden kann. Optional kann auch ein Dichtelement (nicht dargestellt) eingesetzt werden, welches dann an dem Gegenstück 15 und/oder an der Fassung 7 angeordnet sein kann. Ein Dichtelement sorgt dann aufgrund seiner elastischen Ausgestaltung für eine zusätzliche Dichtwirkung und somit eine zuverlässige Abdichtung des Sichtfensters 11.

Ein derartiges Sichtfenster 11 mit einem zugeordneten Referenzelement 13 kann optional auch bei der zumindest einen weiteren Steckerwanne 9 des Rotors 3 eingesetzt werden. Es können also mindestens zwei solche Sichtfenster 11 vorgesehen sein, welche in jeweiligen Verbindungsstücken 6, 9 des Rotors 3 angeordnet sind und beim Verbinden des Verbindungsstücks 6, 9 mit dem jeweiligen Gegenstück 15 verdeckt werden.

Ergänzend oder alternativ zu einer Bandschlaufe kann als Referenzelement 13 auch eine Raupe zur Detektion der Position verwendet werden. Auch diese Raupe kann gegebenenfalls mit einer zusätzlichen Markierung versehen werden.

## Patentansprüche

1. Vorrichtung (2) zum Übertragen von elektrischen Signalen an und/oder von einem drehbaren Bauteil eines Kraftfahrzeugs, mit einem ortsfesten Stator (4) zur ortsfesten Installation in dem Kraftfahrzeug, und mit einem an dem Stator (4) drehbar gelagerten Rotor (3) zur drehfesten Ankopplung an das drehbare Bauteil des Kraftfahrzeugs, wobei der Stator (4) ein Gehäuse (5) aufweist, in welchem ein Flachkabel (14) zum Übertragen der elektrischen Signale angeordnet ist, wobei an dem Rotor (3) ein mit dem Flachkabel (14) elektrisch gekoppeltes Verbindungsstück (6) angeordnet ist, welches zum Verbinden mit einem korrespondierenden Gegenstück (15) des drehbaren Bauteils ausgebildet ist, und wobei der Rotor (3) ein Sichtfenster (11) aufweist, durch welches in einer Nullstellung des Rotors (3) bezüglich des Stators (4) ein Referenzelement (13) des Flachkabels (14) für einen von außerhalb des Gehäuses (5) blickenden Betrachter erkennbar ist,
**dadurch gekennzeichnet, dass**
das Sichtfenster (11) im Bereich des Verbindungsstücks (6) angeordnet ist, sodass in einem verbundenen Zustand des Verbindungsstücks (6) mit dem Gegenstück (15) das Sichtfenster (11) durch das Gegenstück (15) verdeckt ist.

2. Vorrichtung (2) nach Anspruch 1,
**dadurch gekennzeichnet, dass**
das Sichtfenster (11) innerhalb einer das Verbindungsstück (6) umschließenden Fassung (7) angeordnet ist, in welche das Gegenstück (15) einsteckbar ist.

3. Vorrichtung (2) nach Anspruch 1 oder 2,
**dadurch gekennzeichnet, dass**
an dem Verbindungsstück (6) und/oder an dem Gegenstück (15) ein Dichtelement zur Abdichtung des Sichtfensters (11) angeordnet ist.

4. Vorrichtung (2) nach einem der vorhergehenden Ansprüche,
**dadurch gekennzeichnet, dass**
in der Nullstellung das Sichtfenster (11) in Überlappung mit einer Bandschlaufe des Flachkabels (14) als Referenzelement (13) angeordnet ist.

5. Lenksäulenmodul (1) zur Installation an einer Lenksäule eines Kraftfahrzeugs, mit einer Vorrichtung (2) nach einem der vorhergehenden Ansprüche.

6. Kraftfahrzeug mit einer Vorrichtung (2) nach einem der Ansprüche 1 bis 4 und/oder mit einem Lenksäulenmodul (1) nach Anspruch 5.

## Claims

1. Apparatus (2) for transmitting electrical signals to and/or from a rotatable component of a motor vehicle, having a positionally fixed stator (4) which is intended to be installed in a positionally fixed manner in the motor vehicle, having a rotor (3) which is rotatably mounted on the stator (4) and which is intended to be coupled in a rotationally fixed manner to the rotatable component of the motor vehicle, wherein the stator (4) has a housing (5) in which a flat cable (14) for transmitting the electrical signals is arranged, wherein a connecting piece (6) which is electrically coupled to the flat cable (14) and is designed to be connected to a corresponding mating piece (15) of the rotatable component is arranged on the rotor (3), and wherein the rotor (3) has a viewing window (11) through which it is possible for a viewer looking from outside the housing (5) to identify a reference element (13) of the flat cable (14) in a neutral position of the rotor (3) with respect to the stator (4),
**characterized in that**
the viewing window (11) is arranged in the region of the connecting piece (6), so that the viewing window (11) is covered by the mating piece (15) in a state in which the connecting piece (6) is connected to the mating piece (15).

2. Apparatus (2) according to Claim 1,
**characterized in that**
the viewing window (11) is arranged within a holder (7) which surrounds the connecting piece (6) and into which the mating piece (15) can be inserted.

3. Apparatus (2) according to Claim 1 or 2,
**characterized in that**
a sealing element for sealing off the viewing window (11) is arranged on the connecting piece (6) and/or on the mating piece (15).

4. Apparatus (2) according to one of the preceding claims,
**characterized in that**
the viewing window (11) is arranged so as to overlap a tape loop of the flat cable (14) as reference element (13) in the neutral position.

5. Steering column module (1) which is intended to be installed on a steering column of a motor vehicle, having an apparatus (2) according to one of the preceding claims.

6. Motor vehicle having an apparatus (2) according to one of Claims 1 to 4 and/or having a steering column module (1) according to Claim 5.

## Revendications

1. Dispositif (2) de transmission de signaux électriques à et/ou depuis un composant rotatif d'un véhicule à moteur, comprenant un stator fixe (4), destiné à être installé à demeure dans le véhicule à moteur, et un rotor (3), supporté en rotation sur le stator (4) et destiné à être couplé de manière solidaire en rotation au composant rotatif du véhicule à moteur, dans lequel le stator (4) comporte un boîtier (5) dans lequel est disposé un câble plat (14) destiné à la transmission de signaux électriques, dans lequel un élément de raccordement (6), couplé électriquement au câble plat (14), qui est conçu pour se raccorder à un élément homologue (15) correspondant du composant rotatif est disposé sur le rotor (3), et dans lequel le rotor (3) comporte une fenêtre d'inspection (11) à travers laquelle un observateur regardant de l'extérieur du boîtier (5) peut identifier un élément de référence (13) du câble plat (14) à une position neutre du rotor (3) par rapport au stator (4), **caractérisé en ce que** la fenêtre d'inspection (11) est disposée dans la zone de l'élément de raccordement (6) de manière à ce que, lorsque l'élément de raccordement (6) est à l'état raccordé à l'élément homologue (15), la fenêtre d'inspection (11) soit masquée par l'élément homologue (15).

2. Dispositif (2) selon la revendication 1, **caractérisé en ce que** la fenêtre d'inspection (11) est disposée à l'intérieur d'une monture (7) entourant l'élément de raccordement (6), dans laquelle l'élément homologue (15) peut être enfiché.

3. Dispositif (2) selon la revendication 1 ou 2, **caractérisé en ce qu'**un élément d'étanchéité destiné à rendre étanche la fenêtre d'inspection (11) est disposé sur l'élément de raccordement (6) et/ou sur l'élément homologue (15).

4. Dispositif (2) selon l'une des revendications précédentes,
**caractérisé en ce que**, à la position neutre, la fenêtre d'inspection (11) est agencée de manière à former un chevauchement avec une boucle du câble plat (14) en tant qu'élément de référence (13).

5. Module de colonne de direction (1) destiné à être installé sur une colonne de direction d'un véhicule à moteur, comportant un dispositif (2) selon l'une des revendications précédentes.

6. Véhicule à moteur comportant un dispositif (2) selon l'une des revendications 1 à 4 et/ou un module de colonne de direction (1) selon la revendication 5.
